(19)

Europäisches
Patentamt
European
Patent Office
Office européen
des brevets

(11) **EP 4 080 254 A1**

(12) **EUROPEAN PATENT APPLICATION**

(43) Date of publication:
**26.10.2022 Bulletin 2022/43**

(21) Application number: **22165570.7**

(22) Date of filing: **30.03.2022**

(51) International Patent Classification (IPC):
**G02B 3/00** (2006.01)     **G02B 30/27** (2020.01)
**G02B 27/01** (2006.01)

(52) Cooperative Patent Classification (CPC):
**G02B 3/005; G02B 30/27;** G02B 27/01

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.04.2021 KR 20210051633**

(71) Applicant: **Samsung Electronics Co., Ltd.
Gyeonggi-do, 16677 (KR)**

(72) Inventors:
• **Kim, Chansu**
 **16678 Suwon-si, Gyeonggi-do (KR)**
• **Choi, Yoonsun**
 **16678 Suwon-si, Gyeonggi-do (KR)**
• **Lee, Jinho**
 **16678 Suwon-si, Gyeonggi-do (KR)**

(74) Representative: **Grünecker Patent- und
Rechtsanwälte
PartG mbB
Leopoldstraße 4
80802 München (DE)**

(54) **LENTICULAR LENS AND DISPLAY APPARATUS FOR THREE-DIMENSIONAL HEAD-UP DISPLAY INCLUDING THE SAME**

(57)     Provided is a display apparatus for a three-dimensional (3D) head-up display (HUD), the display apparatus including a transparent substrate, a polarizing film layer provided on the transparent substrate, and a lenticular lens provided on the polarizing film layer opposite to the transparent substrate, wherein the lenticular lens includes an adhesive layer, a base substrate provided on the adhesive layer, and a pattern layer provided on the base substrate opposite to the adhesive layer.

FIG. 1

EP 4 080 254 A1

**Description**

BACKGROUND

1. Field

Methods and apparatuses consistent with example embodiments relate to a lenticular lens, and a display apparatus for a three-dimensional (3D) head-up display (HUD) including the lenticular lens.

2. Description of Related Art

One of the most dominant factors for recognizing a three-dimensional (3D) image may be a difference between images viewed at both eyes of a user. A scheme of display different images to both eyes of a user may include a glasses scheme of obtaining a desired image through filtering using polarization-based division, time division, or wavelength division of varying a wavelength of a primary color, and a glasses-free scheme of displaying each image only in a predetermined space using a 3D conversion device, for example, a parallax barrier, a lenticular lens, or a directional backlight unit (BLU). The glasses-free scheme may reduce an inconvenience of wearing glasses. For example, a 3D image may also be provided by an optical system, for example, a mirror or a lens. In this example, a direction of light may be changed by the optical system, and accordingly the change in the direction of the light may need to be taken into consideration during rendering of the 3D image.

A head-up display (HUD) system may generate a virtual image in front of a driver and may display information in the virtual image, to provide a variety of information to the driver. The information provided to the driver may include, for example, navigation information and dashboard information such as a vehicle speed, a fuel level, or an engine revolution per minute (RPM). The driver may more easily recognize the information displayed in front without turning his or her gaze during driving, and thus driving safety may be enhanced. In addition to the navigation information and the dashboard information, the HUD system may also provide the driver with, for example, lane marking, construction marking, traffic accident marking, or a warning sign indicating a pedestrian to assist with driving when a from view is not clear, using an augmented reality (AR) scheme.

However, to realize 3D using a HUD, there is a need for a precise eye tracking technology and focusing to inhibit a moire pattern and crosstalk, a need to secure a BLU of a liquid crystal display (LCD) with high luminance, and a need to ensure dimensional stability of a lens.

SUMMARY

The subject matter of the invention is as set out in the appended claims.

One or more example embodiments may address at least the above problems and/or disadvantages and other disadvantages not described above. Also, the example embodiments are not required to overcome the disadvantages described above, and an example embodiment may not overcome any of the problems described above.

One or more example embodiments may provide a lenticular lens suitable for a display apparatus for a three-dimensional (3D) head-up display (HUD), and a display apparatus for a 3D HUD including the lenticular lens.

One or more example embodiments may provide a lenticular lens including an adhesive layer, a base substrate formed on the adhesive layer, and a pattern layer formed on the base substrate.

Additional aspects of example embodiments will be set forth in part in the description which follows and, in part, will be apparent from the description, or may be learned by practice of the disclosure.

According to an aspect of an example embodiment, there is provided a lenticular lens including an adhesive layer, a base substrate provided on the adhesive layer, and a pattern layer provided on the base substrate opposite to the adhesive layer.

The base substrate may include polyethylene terephthalate.

The base substrate may include uniaxially stretched polyethylene terephthalate.

A thickness of the base substrate may range from 50 $\mu$m to 100 $\mu$m.

An optical retardation of the base substrate may be greater than or equal to 7,000 nm at a wavelength of 550 nm.

When the base substrate has a moisture permeability that is less than or equal to 100 g/m$^2$ at 63°C and is left at a relative humidity of 93% for 500 hours, a shrinkage ratio in a transverse direction of the base substrate may be less than or equal to 0.1%.

The pattern layer may include at least one acrylic polymer including ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, n-octyl (meth)acrylate, isooctyl (meth)acrylate, isononyl (meth)acrylate, lauryl (meth)acrylate, and tetradecyl (meth)acrylate.

The pattern layer may include a pattern with a semicircular cross section.

A pitch of a pattern of the pattern layer may range from 60 $\mu$m to 150 $\mu$m, and a height of the pattern may range from 3 $\mu$m to 20 $\mu$m.

A refractive index of the pattern layer may range from 1.45 to 1.60, a light transmittance of the pattern layer may be greater than or equal to 92% at a wavelength of 550 nm, and a haze of the pattern layer may be less than or equal to 2%.

The pattern layer may include at least one curing agent including polyfunctional phenol compound, an amine compound, an imidazole compound, an acid anhydride, an organophosphorus compound, a halide, a polyfunctional acrylic compound, a urethane compound, an isocyanate compound, an alcohol compound, polyamide, polysulfide, and boron trifluoride.

A pattern of the pattern layer may be formed by imprinting using a mold.

A weight percent of an aromatic monomer included in the pattern layer may be less than or equal to 20 wt %.

A thickness of the adhesive layer may range from 10 $\mu$m to 30 $\mu$m.

According to another aspect of an example embodiment, there is provided a display apparatus for a three-dimensional (3D) head-up display (HUD), the display apparatus including a transparent substrate, a polarizing film layer provided on the transparent substrate, and a lenticular lens provided on the polarizing film layer opposite to the transparent substrate, wherein the lenticular lens includes an adhesive layer, a base substrate provided on the adhesive layer, and a pattern layer provided on the base substrate opposite to the adhesive layer.

According to yet another aspect of an example embodiment, there is provided a vehicle including a display apparatus configured to implement a three-dimensional (3D) head-up display (HUD), the display apparatus including a transparent substrate, a polarizing film layer provided on the transparent substrate, and a lenticular lens provided on the polarizing film layer opposite to the transparent substrate, wherein the lenticular lens includes an adhesive layer, a base substrate provided on the adhesive layer, and a pattern layer provided on the base substrate opposite to the adhesive layer.

The base substrate may include polyethylene terephthalate.

The base substrate may include uniaxially stretched polyethylene terephthalate.

A thickness of the base substrate may range from 50 $\mu$m to 100 $\mu$m.

An optical retardation of the base substrate may be greater than or equal to 7,000 nm at a wavelength of 550 nm.

BRIEF DESCRIPTION OF THE DRAWINGS

The above and/or other aspects will be more apparent by describing example embodiments, taken in conjunction with the accompanying drawings, in which:

FIG. 1 is a perspective view of a lenticular lens according to an example embodiment;
FIG. 2 is a perspective view of a display apparatus for a three-dimensional (3D) head-up display (HUD) according to an example embodiment; and
FIG. 3 is a cross-sectional view of a display apparatus for a 3D HUD according to an example embodiment.

DETAILED DESCRIPTION

Hereinafter, example embodiments will be described in detail with reference to the accompanying drawings. However, various alterations and modifications may be made to the example embodiments. The example embodiments are not construed as limited to the disclosure and should be understood to include all changes, equivalents, and replacements within the idea and the technical scope of the disclosure.

The terminology used herein is for the purpose of describing particular example embodiments only and is not to be limiting of the example embodiments. As used herein, the singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

Unless otherwise defined, all terms including technical and scientific terms used herein have the same meaning as commonly understood by one of ordinary skill in the art to which example embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the example embodiments with reference to the accompanying drawings, like reference numerals refer to like constituent elements and a repeated description related thereto will be omitted. In the description of example embodiments, detailed description of well-known related technologies will be omitted when it is deemed that such description will cause ambiguous interpretation of the present disclosure.

Also, the terms "first," "second," "A," "B," "(a)," "(b)," and the like may be used herein to describe components according to example embodiments. Each of these terminologies is not used to define an essence, order or sequence of a corresponding component but used merely to distinguish the corresponding component from other component(s). It should be noted that if it is described in the specification that one component is "connected", "coupled", or "joined" to another component, a third component may be "connected", "coupled", and "joined" between the first and second components, although the first component may be directly connected, coupled or joined to the second component.

A component having a common function with a component included in one example embodiment is described using a like name in another example embodiment. Unless otherwise described, description made in one example embodiment may be applicable to another example embodiment and detailed description within a duplicate range is omitted.

According to example embodiments, to implement a three-dimensional (3D) display, a glasses-free system and a glasses system may be used. As an example of a glasses-free system that does not require glasses specially designed to implement 3D, a scheme of using a lenticular lens may be provided.

According to example embodiments, a lenticular lens may refer to a lens that includes a plurality of convex lenticules formed on one surface thereof, and may be introduced into a 3D display apparatus to express stereoscopic 3D information.

For example, the lenticular lens may be provided in a vehicle, and may provide a 3D head-up display (HUD) to a user. The vehicle may have a windshield in a moving direction so that a HUD may be displayed on the windshield. In particular, for a 3D HUD, an image with a difference in visual information between a left eye and a right eye of a user may be provided.

The lenticular lens may include an adhesive layer, a base substrate formed on the adhesive layer, and a pattern layer formed on the base substrate.

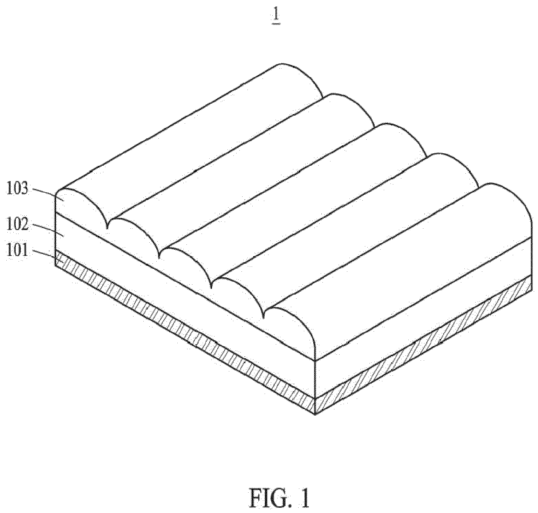

FIG. 1 is a perspective view of an example of a lenticular lens according to an example embodiment.

Referring to FIG. 1, a lenticular lens 1 may include an adhesive layer 101, a base substrate 102 formed on the adhesive layer 101, and a pattern layer 103 formed on the base substrate 102.

For example, the adhesive layer 101 may be prepared by thermally curing or photo-curing an adhesive material.

For example, the adhesive layer 101 may be formed by applying the adhesive material onto the base substrate 102.

In the case of an automobile as an example of one of various vehicles, a temperature in the automobile may rapidly change (for example, in a variable temperature range of -40°C to 90°C). Accordingly, the automobile may be easily exposed to direct sunlight, and may be exposed to various humidity conditions depending on a weather environment such as snow or rain.

The lenticular lens according to example embodiments may have a relatively strong resistance to a high temperature, a high humidity, or sunlight, caused by the above-described outdoor exposure, and may be mounted on a vehicle. For example, a vehicle may include a lenticular lens according to an example embodiment.

According to example embodiments, the adhesive material may include, for example, an acrylic acid ester-based monomer, an acrylic acid-based monomer, an initiator, and a curing agent.

For example, when the adhesive material is used to form an adhesive layer, shrinkage caused by an external environment may be minimized. In particular, the adhesive material may have an advantage in that the adhesive material does not transfer, to the lenticular lens, stress caused by expansion or shrinkage of a base material (for example, a polarizing film layer) attachable to the lenticular lens.

The acrylic acid ester-based monomer may include, for example, an alkyl acrylic acid ester monomer including an alkyl group having 2 to 14 carbon atoms.

The alkyl acrylic acid ester monomer may include at least one of ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, n-octyl (meth)acrylate, isooctyl (meth)acrylate, isononyl (meth)acrylate, lauryl (meth)acrylate, and tetradecyl (meth)acrylate. The weight percentage (wt %) of alkyl acrylic acid ester monomer present in the adhesive material may be greater than or equal to about 50 wt %.

According to example embodiments, the alkyl acrylic acid ester monomer may be 2-ethylhexyl (meth)acrylate.

The alkyl acrylic acid ester monomer may include the alkyl group having 2 to 14 carbon atoms. When a number of carbon atoms in the alkyl group is greater than or equal to 15, a glass transition temperature Tg of the adhesive material may increase, and adhesion may decrease.

According to example embodiments, a weight percentage of the alkyl acrylic acid ester monomer present in the adhesive material may be greater than or equal to 50 wt %.

According to example embodiments, a weight percentage of the alkyl acrylic acid ester monomer present in the adhesive material may range from 50 wt % to 70 wt %.

For example, when the weight percentage of the alkyl acrylic acid ester monomer present in the adhesive material is less than 50 wt %, a peel strength of the adhesive layer 101 prepared by the adhesive material may increase.

According to example embodiments, the acrylic acid ester-based monomer may include a hydroxyl acrylic acid ester monomer.

The hydroxyl acrylic acid ester monomer may include at least one of 2-hydroxyethyl (meth)acrylate, 2-hydroxypropyl (meth)acrylate, 4-hydroxybutyl (meth)acrylate, 2-hydroxy propylene glycol (meth)acrylate, and 2-hydroxy propylene (meth)acrylate. The weight percentage of the hydroxyl acrylic acid ester monomer present in the adhesive material may range from 5 wt % to 30 wt %.

The hydroxyl acrylic acid ester monomer may indicate that a hydroxyl group (-OH) is bonded to the acrylic acid ester monomer.

According to example embodiments, the hydroxyl acrylic acid ester monomer may be 2-hydroxyethyl (meth)acrylate.

According to example embodiments, the weight percentage of the hydroxyl acrylic acid ester monomer present in the adhesive material may range from 5 wt % to 30 wt %.

For example, when the weight percentage of the hydroxyl acrylic acid ester monomer in the adhesive material is less than 5 wt %, a peel strength, and an efficiency of cutting (for example, punching) may decrease. When the weight percentage of the hydroxyl acrylic acid ester monomer in the adhesive material exceeds 30 wt %, the adhesive material may become hard, adhesion may decrease, and viscosity may increase, which may result in a decrease in processability.

According to example embodiments, the acrylic acid ester-based monomer may further include isobornyl (meth)acrylate as a cyclic aliphatic monomer. The weight percentage of cyclic aliphatic monomer present in the adhesive material may be less than or equal to 10 wt %.

According to example embodiments, the cyclic aliphatic monomer may be isobornyl acrylate.

According to example embodiments, the weight percentage of cyclic aliphatic monomer present in the adhesive material may be less than or equal to 10 wt %.

For example, when the weight percentage of the cyclic aliphatic monomer in the adhesive material exceeds 10 wt %, a product may become hard, which may result in a decrease in adhesion to the substrate.

According to example embodiments, the acrylic acid-based monomer may include (meth)acrylic acid. The weight percentage of acrylic acid-based monomer present in the adhesive material may range from 10 wt % to 40 wt %.

According to example embodiments, the acrylic acid-based monomer may be acrylic acid.

The weight percentage of acrylic acid-based monomer present in the adhesive material may range from 10 wt % to 40 wt %. For example, when the amount of the acrylic acid-based monomer is outside of the above range, a peel strength between a product and a substrate may decrease.

According to example embodiments, the initiator may include at least one of a benzoin-based compound, a hydroxy ketone-based compound, and an amino ketone-based compound. The amount of initiator present may be 0.01 parts by weight to 3 parts by weight, relative to 100 parts by weight of the acrylic acid ester-based monomer.

According to example embodiments, the initiator may induce a curing reaction of the adhesive material by generating radicals by ultraviolet (UV), visible light, electromagnetic waves, or heat.

According to example embodiments, the amount of initiator present may be 0.01 parts by weight to 3 parts by weight, relative to 100 parts by weight of the acrylic acid ester-based monomer.

For example, when the amount of the initiator is less than 0.01 parts by weight, relative to 100 parts by weight of the acrylic acid ester-based monomer, a reaction may not occur, or a reaction time may increase. When the amount of the initiator exceeds 3 parts by weight, relative to 100 parts by weight of the acrylic acid ester-based monomer, a degree of polymerization when the adhesive material is cured may decrease, or unreacted initiators may remain as impurities.

According to example embodiments, the curing agent may include at least one of a polyfunctional phenol compound, an amine compound, an imidazole compound, an acid anhydride, an organophosphorus compound, a halide, a polyfunctional acrylic compound, a urethane compound, an isocyanate compound, an alcohol compound, polyamide, polysulfide, and boron trifluoride. The amount of curing agent present may be 0.01 parts by weight to 5 parts by weight, relative to 100 parts by weight of the acrylic acid ester-based monomer.

According to example embodiments, the amount of curing agent present may be 0.01 parts by weight to 5 parts by weight, relative to 100 parts by weight of the acrylic acid ester-based monomer.

For example, when the amount of the curing agent is less than 0.01 parts by weight, relative to 100 parts by weight of the acrylic acid ester-based monomer, a reaction time may increase, or curing may be insufficiently performed. When the amount of the curing agent exceeds 5 parts by weight, relative to 100 parts by weight of the acrylic acid ester-based monomer, the cured adhesive material may become extremely hard, or unreacted curing agents may remain as impurities.

According to example embodiments, the adhesive material may have a light transmittance of 92% or greater at a wavelength of 550 nanometers (nm), and have a haze less than 2%.

According to example embodiments, the adhesive layer may be prepared by thermally curing or photo-curing the adhesive material.

According to example embodiments, the adhesive layer may be formed on a base material.

According to example embodiments, the adhesive layer may have a thickness of 5 micrometers ($\mu$m) to 100 $\mu$m, and may be formed by applying the adhesive material onto the base material, using, for example, roll-to-roll coating, dip coating, slot die coating, gravure coating, or spray coating.

According to example embodiments, the adhesive layer may have a thickness of 5 $\mu$m to 20 $\mu$m.

For example, when the thickness of the adhesive layer is greater than 100 $\mu$m, a visibility of a display apparatus including the adhesive layer as one component may decrease. When the thickness of the adhesive layer is less than 5 $\mu$m, the adhesive layer may be easily removed or peeled off due to a lack of adhesion.

According to example embodiments, the adhesive layer may have a shear modulus of 3 kilopascal (kPa) to 30 kPa at 85°C, and a shear modulus of 10 kPa to 100 kPa at 25°C.

According to example embodiments, the adhesive layer may have a shear modulus of 30 kPa to 70 kPa at 25°C, and have a shear modulus of 5 kPa to 15 kPa at 85°C. The shear modulus is measured in accordance with ASTM E143.

According to example embodiments, to overcome in an environment with a severe temperature difference, an adhesive layer in which both a shear modulus measured at room temperature and a shear modulus measured at a high temperature are taken into consideration may be used. In addition, if a shear modulus measured at a high temperature decreases, shrinkage of a lenticular lens according to example embodiments may be suppressed.

According to example embodiments, the adhesive layer may have a peel strength of 1,000 grams-force ($g_f$)/inch (2.54 cm) or greater according to ASTM D903.

The peel strength may be measured according to ASTM D903 by attaching a film or a lenticular lens to a surface of a panel or a glass plate using an adhesive layer to have a width of 25 millimeters (mm), by turning a free end of the film or the lenticular lens, and by pulling the free end in an opposite direction to a free end of the panel or the glass plate.

According to example embodiments, the adhesive layer may have a peel strength of 1,500 $g_f$/inch (2.54 cm) or greater.

In an example, in the lenticular lens 1, the pattern layer 103 may be formed on a first surface of the base substrate 102, and the adhesive layer 101 may be formed on a second surface of the base substrate 102 opposite to the first surface of the base substrate 102 on which the pattern layer 103 is formed. However, embodiments are not limited thereto. For example, the adhesive layer 101 may be formed on a first surface of the base substrate 102, and then the pattern layer 103 may be formed on a second surface of the base substrate 102 opposite to the first surface of the base substrate 102.

According to example embodiments, the pattern layer 103 may be formed by applying an acrylic polymer onto the base substrate 102 to a uniform thickness through, for example, slot-die coating, roll-coating, or bar-coating and by performing curing under UV light and imprinting to have a pattern.

According to example embodiments, the pattern layer 103 may be formed by applying the acrylic polymer onto the base substrate 102 to a thickness of 10 $\mu$m to 100 $\mu$m so that a pattern may be formed.

According to example embodiments, the base substrate 102 may include polyethylene terephthalate (PET).

According to example embodiments, the base substrate 102 may include uniaxially stretched PET.

For example, when a uniaxially stretched film is used as a base substrate 102, an optical characteristic may be excellent in comparison to when a biaxially stretched film is used.

Since a biaxially stretched PET has a characteristic of an optical anisotropy, a phase delay may occur differently depending on a position of a base substrate 102 when linearly polarized light passes, so that the linearly polarized light may be changed to circularly or elliptically polarized light, which may result in a decrease in luminance of an image. Since a constant phase difference in a uniaxially stretched PET may be maintained, a constant phase delay may be maintained regardless of the position of the base substrate 102.

According to example embodiments, the lenticular lens may be formed so that a difference between a machine direction (MD) of the PET included in the base substrate 102 and a polarization direction of a polarizing film layer that may be attached to the lenticular lens may be less than or equal to 5 degrees.

According to example embodiments, the base substrate 102 may have a thickness of 50 $\mu$m to 100 $\mu$m.

According to example embodiments, the base substrate 102 may have a thickness of 60 $\mu$m to 80 $\mu$m.

According to example embodiments, the base substrate 102 may have an optical retardation of 7,000 nm or greater at a wavelength of 550 nm.

According to example embodiments, a relationship between a value of an optical retardation $R_e$ and luminance $l$ may be represented as shown in Equation 1 below.

[Equation 1]

$$I/I_0 = \frac{1}{2}\sin^2(\pi\frac{R_e}{\lambda})$$

For example, for a predetermined value of the optical retardation $R_e$, the luminance $I$ may be expressed in a form of a sine function, and the value of the optical retardation $R_e$ may be calculated as a product of a refractive index deviation, a wavelength and a film.

In an example, when the value of the optical retardation $R_e$ is low, a wavelength with a low luminance and a wavelength with a high luminance may alternately occur in a visible ray region, which may result in a great luminance deviation and a chromatic dispersion. In another example, when the value of the optical retardation $R_e$ is greater than or equal to 7,000 nm, luminance may be uniform in wavelengths of all regions, so that chromatic dispersion may be eliminated.

According to example embodiments, the optical retardation at the wavelength of 550 nm may have a value of 8,000 nm or greater, and have a value of 10,000 nm or greater.

In an example, when the base substrate 102 has a moisture permeability of 100 g/m²·day or less and is left at 63°C and a relative humidity of 93% for 500 hours, a shrinkage ratio in a transverse direction (TD) of the base substrate 102 may be 0.1% or less.

Since a film of the base substrate 102 does not easily absorb moisture even under a high humidity condition, the base substrate 102 may exhibit even performance regardless of a temperature.

According to example embodiments, the pattern layer 103 may include at least one acrylic polymer among ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, n-octyl (meth)acrylate, isooctyl (meth)acrylate, isononyl (meth)acrylate, lauryl (meth)acrylate, and tetradecyl (meth)acrylate.

According to example embodiments, the pattern layer 103 may further include ethylene oxide and urethane acrylate.

Since ethylene oxide and urethane acrylate may be further included, the pattern layer 103 may have stronger adhesion to the base substrate 102.

According to example embodiments, the pattern layer 103 may be formed by applying an acrylic polymer onto the base substrate 102.

According to example embodiments, the pattern layer 103 may be formed by applying an acrylic polymer onto the base substrate 102, performing photo-curing, and performing imprinting using a mold so that a pattern may be formed.

According to example embodiments, the pattern layer 103 may have a pattern with a semicircular cross section.

According to example embodiments, the pattern layer 103 may have a plurality of patterns, each having a semicircular cross section, and may be for separating a left image and a right image.

According to example embodiments, the pattern layer 103 may include a plurality of lenticules.

According to example embodiments, a pattern of the pattern layer 103 may include a plurality of semicylindric lenticules, and an arrangement direction of the lenticular lens may be slanted at an angle of 10 degrees to 15 degrees, not in a normal vertical direction.

In the arrangement direction of the lenticular lens, an angle between a longitudinal direction of a lenticule and a normal line of one edge of the lenticular lens when the lenticular lens is viewed from the top may be measured.

According to example embodiments, the pattern layer 103 may be slanted at an angle of, for example, 10 degrees to 15 degrees vertically in a counterclockwise direction, and may be slanted at about 12 degrees.

In an example, when an angle at which the pattern layer 103 is slanted is greater than or equal to 15 degrees, moire may increase, and a resolution of a 3D image may decrease. In another example, when the angle at which the pattern layer 103 is slanted is less than or equal to 10 degrees, moire may increase, and a quality of an image may decrease due to a black matrix.

According to example embodiments, the pattern of the pattern layer 103 may have a pitch of 60 $\mu$m to 150 $\mu$m, and a height of 3 $\mu$m to 20 $\mu$m.

According to example embodiments, the pattern of the pattern layer 103 may be formed by imprinting a portion of the acrylic polymer.

According to example embodiments, the pattern of the pattern layer 103 may have a pitch of 60 $\mu$m to 100 $\mu$m.

According to example embodiments, the pattern layer 103 may have a refractive index of 1.45 to 1.60, a light transmittance of 92% or greater at a wavelength of 550 nm, and a haze of 2% or less.

According to example embodiments, the pattern layer 103 may include at least one curing agent among polyfunctional phenol compound, an amine compound, an imidazole compound, an acid anhydride, an organophosphorus compound, a halide, a polyfunctional acrylic compound, a urethane compound, an isocyanate compound, an alcohol compound, polyamide, polysulfide, and boron trifluoride.

According to example embodiments, the pattern layer 103 may be formed by applying the acrylic polymer onto the base substrate 102 and performing photo-curing. The curing agent may be included for the photo-curing.

According to example embodiments, the pattern of the pattern layer 103 may be formed through imprinting using a mold.

According to example embodiments, a weight percentage of an aromatic monomer present in the pattern layer 103 may be less than or equal to 20 wt %.

The aromatic monomer has discoloration properties caused by heat and UV, a relatively small amount of an aromatic monomer may be included to prevent or reduce discoloration.

According to example embodiments, in the pattern layer 103, the amount of aromatic monomer included may be 5 wt % or less, and may be 3 wt % or less.

According to example embodiments, a thickness of the adhesive layer may range from 10 $\mu$m to 30 $\mu$m.

According to example embodiments, a display apparatus for a 3D HUD may include a transparent substrate including a glass, a polarizing film layer formed on the transparent substrate, and a lenticular lens formed on the polarizing film layer. The lenticular lens may include an adhesive layer 101, a base substrate 102 formed on the adhesive layer 101, and a pattern layer 103 formed on the base substrate 102.

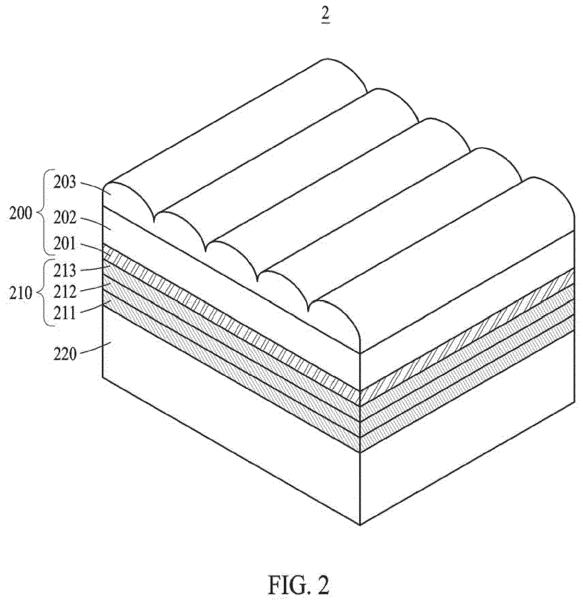

FIG. 2 is a perspective view of a display apparatus for a 3D HUD according to an example embodiment.

Referring to FIG. 2, a display apparatus 2 for a 3D HUD may include a transparent substrate 220, a polarizing film layer 210, and a lenticular lens 200. The lenticular lens 200 may be, for example, the lenticular lens 1 of FIG. 1. The lenticular lens 200 may include an adhesive layer 201, a base substrate 202, and a pattern layer 203.

In FIG. 2, the polarizing film layer 210 may include a polarizing layer 212, a first protective layer 211, and a second protective layer 213. The first protective layer 211, and the second protective layer 213 may be attached to opposite surfaces of the polarizing layer 212.

According to example embodiments, the polarizing layer 212 may include polyvinyl alcohol (PVA). The first protective layer 211 formed on a bottom surface of the polarizing layer 212 may include poly(methyl methacrylate) (PMMA). The second protective layer 213 formed on a surface opposite to the bottom surface of the polarizing layer 212 on which the first protective layer 211 is formed may include triacetyl cellulose (TAC).

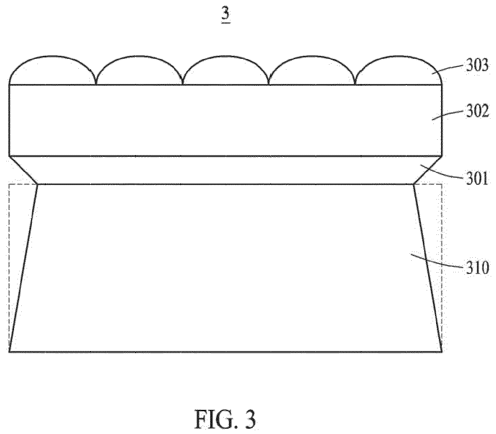

FIG. 3 is a cross-sectional view of a display apparatus for a 3D HUD according to an example embodiment.

Referring to FIG. 3, a polarizing film layer 310 (for example, the polarizing film layer 210 of FIG. 2) of a display apparatus 3 for a 3D HUD may be shrunken due to an external stimulus such as a high temperature or direct sunlight for a relatively long period of time. Stress caused by shrinkage of the polarizing film layer 310 may be mitigated by an adhesive layer 301 (for example, the adhesive layer 101 of FIG. 1), and may not be transferred to a base substrate 302 (for example, the base substrate 102 of FIG. 1) and a pattern layer 303 (for example, the pattern layer 103 of FIG. 1).

Referring to FIG. 3, the adhesive layer 301 may not transfer the stress caused by shrinkage of the polarizing film layer 310, and accordingly the pattern layer 303 may not be deformed, a left image and a right image passing through a lenticular lens may not overlap, rainbow spots may not occur, and a value of a phase difference caused by an angle of incidence of light may remain unchanged.

According to example embodiments, an overlap between a left image and a right image passing through a lenticular lens may be represented by calculating crosstalk (X-talk, %). As shown in Equation 1 below, light $I_{sub\ pixel}$ emitted from a sub-pixel may be defined as a sum of luminance $I_{left}$ of the left image, luminance $I_{right}$ of the right image, and luminance $I_{stray\ light}$ of light lost by unnecessary reflection and scattering. The crosstalk (X-talk) may be defined as a proportion of images that do not contribute to an actual 3D image, as shown in Equation 2 below.

$$[\text{Equation 1}]$$

$$I_{sub\ pixel} = I_{left} + I_{right} + I_{stray\ light}$$

$$[\text{Equation 2}]$$

$$\text{X-talk}[\%] = I_{stray\ light}/(I_{left}+I_{right})\times 100$$

For example, when the display apparatus 3 is left at 95°C for 200 hours, crosstalk may be 2% or less.

Table 1 shows a value obtained by measuring crosstalk due to shrinkage of a lenticular lens.

[Table 1]

| Lens shrinkage ratio | 0.01% | 0.03% | 0.05% | 0.1% |
|---|---|---|---|---|
| Crosstalk | 0.05% | 1% | 2% | 5% |

Table 1 shows that the crosstalk exponentially increases as the shrinkage ratio of the lenticular lens increases. The lens shrinkage ratio may need to be less than or equal to 0.05% so that the crosstalk may be less than or equal to 2%.

According to example embodiments, the base substrate 302 may be stretched and formed, and in particular, may be uniaxially stretched in an MD.

For example, when the adhesive layer 301 is left at 95°C for 200 hours, a shrinkage ratio in a TD of the base substrate 302 may be 0.03% or less, and a shrinkage ratio in an MD of the base substrate 302 may be 0.2% or less.

According to example embodiments, the display apparatus 3 may be mounted on a vehicle to implement a 3D HUD

Hereinafter, the present disclosure will be described in detail based on example embodiments and related examples.

However, the following examples are provided only for purpose of illustrating the present disclosure, and should not be construed as limiting the present disclosure by the examples.

Table 2 shows components of the adhesive material according to Examples 1 and 2 and Related Examples 1 to 5.

[Table 2]

| | Monomer (amount) | Initiator (amount) |
|---|---|---|
| Example 1 | Lauryl acrylate (50%)<br>2-hydroethyl acrylate (30%)<br>Acrylic acid (18%)<br>1,6-Hexanedioldiacrylate (1%)<br>1-Dodecanethiol (0.5%) | Irgacure 184 (0.5%) |
| Example 2 | 2-Ethylhexyl acrylate (50%)<br>4-Hydroxybutyl acrylate (30%) | Irgacure 184 (0.5%) |
| | Acrylic acid (18%)<br>1,6-Hexanedioldiacrylate (1%)<br>1-Dodecanethiol (0.5%) | |
| Related Example 1 | 2-Ethylhexyl acrylate (50%)<br>2-Hydroxyethyl acrylate (30%)<br>Acrylic acid (18%)<br>1,6-Hexanedioldiacrylate (1%)<br>1-Dodecanethiol (0.5%) | Irgacure 184 (0.5%) |
| Related Example 2 | Lauryl acrylate (60%)<br>2-Ethylhexyl acrylate (30%)<br>Acrylic acid (8%)<br>1,6-Hexanedioldiacrylate (1%)<br>1-Dodecanethiol (0.5%) | Irgacure 184 (0.5%) |
| Related Example 3 | 2-Ethylhexyl acrylate (50%)<br>Isobornyl acrylate (30%)<br>Acrylic acid (18%)<br>1,6-Hexanedioldiacrylate (1%)<br>1-dodecanethiol (0.5%) | Irgacure 184 (0.5%) |
| Related Example 4 | 2-Ethylhexyl acrylate (70%)<br>Isobornyl acrylate (20%)<br>Acrylic acid (8%)<br>1,6-Hexanedioldiacrylate (1%)<br>1-dodecanethiol (0.5%) | Irgacure 184 (0.5%) |

(continued)

| | Monomer (amount) | Initiator (amount) |
|---|---|---|
| Related Example 5 | 2-Ethylhexyl acrylate (40%)<br>Isobornyl acrylate (40%)<br>Acrylic acid (18%)<br>1,6-Hexanedioldiacrylate (1%)<br>1-dodecanethiol (0.5%) | Irgacure 184 (0.5%) |

Shear stress G' of adhesive films prepared by curing the adhesive material according to Examples 1 and 2 and Related Examples 1 to 5 in Table 2 measured at 25°C and 85°C in accordance with ASTM E143 are shown in Table 3 below.

[Table 3]

| | G' at 25°C [kPa] | G' at 85°C [kPa] |
|---|---|---|
| Example 1 | 53 | 9 |
| Example 2 | 50.9 | 7.9 |
| Related Example 1 | 69 | 27 |
| Related Example 2 | 17 | 8 |
| Related Example 3 | 24 | 8.5 |
| Related Example 4 | 18 | 5 |
| Related Example 5 | 50 | 11 |

Each of adhesive films prepared using the adhesive material according to Examples 1 and 2 and Related Examples 1 to 5 in Table 2 attached onto a liquid crystal display (LCD) panel or a glass panel to have a width of 25 mm, and a peel strength required to remove the adhesive films measured according to ASTM D903 are shown in Table 4 below.

[Table 4]

| | Peel strength [$g_f$/inch (2.54 cm)] |
|---|---|
| Example 1 | 2300 |
| Example 2 | 1700 |
| Related Example 1 | 2000 |
| Related Example 2 | 950 |
| Related Example 3 | 1500 |
| Related Example 4 | 700 |
| Related Example 5 | 1800 |

The adhesive films prepared using the adhesive material according to Examples 1 and 2 and Related Examples 1 to 5 in Table 2 were provided to measure a shrinkage ratio of a lenticular lens. A lens shrinkage ratio test was performed at a high temperature, for example, 90°C, for 200 hours, an align mark was marked at a position 0.7 mm away from each edge of a lenticular lens with a size of 90.5 mm × 50.7 mm, and a difference was measured with an optical microscope after the test was performed.

Shrinkage ratios of lenticular lenses including the adhesive films prepared using the adhesive material according to Examples 1 and 2 and Related Examples 1 to 5 in Table 2 measured are shown in Table 5 below.

[Table 5]

| | Lens shrinkage ratio in TD | Lens shrinkage ratio in MD |
|---|---|---|
| Example 1 | 0.01 % | 0.06 % |

(continued)

|  | Lens shrinkage ratio in TD | Lens shrinkage ratio in MD |
|---|---|---|
| Example 2 | 0.02 % | 0.10 % |
| Related Example 1 | 0.07 % | 0.10 % |
| Related Example 2 | 0.02 % | 0.10 % |
| Related Example 3 | 0.03 % | 0.21 % |
| Related Example 4 | 0.03 % | 0.07 % |
| Related Example 5 | 0.03 % | 0.21 % |

Based on the results according to Examples 1 to 3, Table 3 shows that adhesive layers prepared using the adhesive material according to Examples 1 and 2 have considerably low shear stress, that is, 10 kPa or less, at a high temperature, for example, 85°C, while ensuring a peel strength of 1,000 $g_f$/inch (2.54 cm) or greater. In addition, due to considerably low lens shrinkage ratios for each direction of a lens, it is possible to effectively suppress shrinkage of a polarizing film layer to the lenticular lens.

On the contrary, adhesive layers prepared using the adhesive material according to Related Examples 1 to 5 are not adequate to be used in a display apparatus for a 3D HUD that operates under severe conditions, due to their extremely high lens shrinkage ratio or low peel strength.

Material according to Examples 3 to 6 and Related Examples 6 to 10 were prepared. Components of material according to Examples 3 to 6 and Related Examples 6 to 10 are shown in Table 6 below.

[Table 6]

|  | Monomer (amount) | Initiator and Additive (amount) |
|---|---|---|
| Example 3 | 2-Ethylhexyl acrylate (11%)<br>1,6-Hexanediol diacrylate (25%)<br>Polyethylene glycol dimethacrylate (15%)<br><br>Trimethylol propane triacrylate (5%)<br>Aliphatic urethane diacrylate (40%) | Irgacure 754 (2%)<br>Darocur (1%)<br>Tinuvin 5151 (0.2%)<br>Tinuvin 400 (0.3%)<br>Tinuvin 292 (0.5%) |
| Example 4 | 2-Ethylhexyl acrylate (6%)<br>n-Butyl acrylate (5%)<br>1,6-Hexanediol diacrylate (25%)<br>Polyethylene glycol dimethacrylate (15%)<br><br>Trimethylol propane triacrylate (5%)<br>Aliphatic urethane diacrylate (40%) | Irgacure 754 (2%)<br>Darocur (1%)<br>Tinuvin 5151 (0.2%)<br>Tinuvin 400 (0.3%)<br>Tinuvin 292 (0.5%) |
| Example 5 | Tetrahydrofurfuryl acrylate (11%)<br>1,6-Hexanediol diacrylate (25%)<br>Polyethylene glycol dimethacrylate (15%)<br><br>Trimethylol propane triacrylate (5%)<br>Aliphatic urethane diacrylate (40%) | Irgacure 754 (2%)<br>Darocur (1%)<br>Tinuvin 5151 (0.2%)<br>Tinuvin 400 (0.3%)<br>Tinuvin 292 (0.5%) |
| Example 6 | Isobornyl acrylate (11%)<br>1,6-Hexanediol diacrylate (25%)<br>Polyethylene glycol dimethacrylate (15%)<br><br>Trimethylol propane triacrylate (5%)<br>Aliphatic urethane diacrylate (40%) | Irgacure 754 (2%)<br>Darocur (1%)<br>Tinuvin 5151 (0.2%)<br>Tinuvin 400 (0.3%)<br>Tinuvin 292 (0.5%) |
| Related Example 6 | 2-Ethylhexyl acrylate (11%)<br>1,6-Hexanediol diacrylate (25%) | Irgacure 754 (2%)<br>Darocur (1%) |

(continued)

| | Monomer (amount) | Initiator and Additive (amount) |
|---|---|---|
| | Polyethylene glycol dimethacrylate (15%) | Tinuvin 5151 (0.2%)<br>Tinuvin 400 (0.3%) |
| | Trimethylol propane triacrylate (5%)<br>Aromatic urethane diacrylate (40%) | Tinuvin 292 (0.5%) |
| Related Example 7 | 2-Ethylhexyl acrylate (11%)<br>1,6-Hexanediol diacrylate (25%)<br>Polyethylene glycol dimethacrylate (15%)<br><br>Trimethylol propane triacrylate (5%)<br>Aromatic urethane diacrylate (38%) | Irgacure 754 (2%)<br>Darocur (1%)<br>Tinuvin 5151 (0.4%)<br>Tinuvin 400 (0.6%)<br>Tinuvin 292 (1%) |
| Related Example 8 | 2-Ethylhexyl acrylate (11%)<br>1,6-Hexanediol diacrylate (25%)<br>Trimethylol propane triacrylate (5%)<br>Aliphatic urethane diacrylate (55%) | Irgacure 754 (2%)<br>Darocur (1%)<br>Tinuvin 5151 (0.2%)<br>Tinuvin 400 (0.3%)<br>Tinuvin 292 (0.5%) |
| Related Example 9 | 2-Ethylhexyl acrylate (11%)<br>1,6-Hexanediol diacrylate (25%)<br>Ethoxylated bisphenol A dimethylacrylate (15%)<br><br>Trimethylol propane triacrylate (5%)<br>Aliphatic urethane diacrylate (40%) | Irgacure 754 (2%)<br>Darocur (1%)<br>Tinuvin 5151 (0.2%)<br>Tinuvin 400 (0.3%)<br>Tinuvin 292 (0.5%) |
| Related Example 10 | 2-Hydroxyl-3-phenoxyproyl acrylate (11%)<br><br>1,6-Hexanediol diacrylate (25%)<br>Polyethylene glycol dimethacrylate (15%)<br><br>Trimethylol propane triacrylate (5%)<br>Aliphatic urethane diacrylate (40%) | Irgacure 754 (2%)<br>Darocur (1%)<br>Tinuvin 5151 (0.2%)<br>Tinuvin 400 (0.3%)<br>Tinuvin 292 (0.5%) |

Pattern layers were prepared on base substrates using the material according to Examples 3 to 6 and Related Examples 6 to 10 in Table 6, and a refractive index, mold release properties, and UV discoloration of each of the pattern layers were measured.

In particular, the UV discoloration was obtained by measuring a degree of discoloration based on ASTM E313 and ASTM E1164 under conditions of a black panel temperature of 63°C, a chamber temperature of 50°C, a relative humidity (RH) of 50%, and an illuminance of 65 W/m$^2$ in a Xenon arc lamp. The degree of discoloration was measured using Minolta CR-400 and calculated based on changes in x and y chromaticity coordinates, and whether the degree of discoloration is less than 1% or exceeds 5% is shown in Table 7 below.

[Table 7]

| | Refractive index | Mold release properties | UV discoloration |
|---|---|---|---|
| Example 3 | 1.48 | Good | <1% |
| Example 4 | 1.48 | Good | <1% |
| Example 5 | 1.48 | Good | <1% |
| Example 6 | 1.48 | Good | <1% |
| Related Example 6 | 1.58 | Good | >5% |
| Related Example 7 | 1.58 | Good | >5% |

(continued)

| | Refractive index | Mold release properties | UV discoloration |
|---|---|---|---|
| Related Example 8 | 1.48 | Good | <1% |
| Related Example 9 | 1.58 | Good | >5% |
| Related Example 10 | 1.56 | Bad | >5% |

Pattern layers were prepared on base substrates using the material according to Examples 3 to 6 and Related Examples 6 to 10 in Table 6, and adhesion between the base substrates and the pattern layers was measured. A PET substrate was used as a base substrate.

To measure the adhesion, a pattern after peeling using a scheme based on ASTM 3359 or JIS K5900 5-6 was measured, and the adhesion was determined by values of 0B to 5B as shown in Table 8 below.

[Table 8]

| | Adhesion |
|---|---|
| Example 3 | 5B |
| Example 4 | 5B |
| Example 5 | 5B |
| Example 6 | 5B |
| Related Example 6 | 5B |
| Related Example 7 | 5B |
| Related Example 8 | 0B |
| Related Example 9 | 0B |
| Related Example 10 | 5B |

Tables 7 and 8 show that when the pattern layers prepared using the material according to Examples 3 to 6 are included, discoloration by UV is low because an amount of an aliphatic monomer is greater than an amount of an aromatic monomer.

The pattern layers prepared using the material according to Related Examples 6 to 10 are not adequate to be used in the display apparatus for a 3D HUD that operates under severe conditions due to poor adhesion to the base substrates or high UV discoloration based on a result of weather resistance.

According to example embodiments, in a lenticular lens, light interference may not occur in external environmental conditions such as a high temperature, a low temperature, a high humidity, or direct sunlight, and a size and a position of the lenticular lens may remain unchanged.

While example embodiments have been described, it will be apparent to one of ordinary skill in the art that various changes in form and details may be made in these example embodiments without departing from the scope of the claims. The example embodiments described herein are to be considered in a descriptive sense only, and not for purposes of limitation. Descriptions of features or aspects in each example embodiment are to be considered as being applicable to similar features or aspects in other embodiments. Suitable results may be achieved if the described techniques are performed in a different order, and/or if components in a described system, architecture, device, or circuit are combined in a different manner and/or replaced or supplemented by other components or their equivalents.

Therefore, the scope of the disclosure is defined not by the detailed description, but by the claims and their equivalents, and all variations within the scope of the claims and their equivalents are to be construed as being included in the disclosure.

## Claims

1.  A lenticular lens comprising:

    an adhesive layer;

a base substrate provided on the adhesive layer; and
a pattern layer provided on the base substrate opposite to the adhesive layer.

2. The lenticular lens of claim 1, wherein the base substrate comprises polyethylene terephthalate.

3. The lenticular lens of claim 2, wherein the base substrate comprises uniaxially stretched polyethylene terephthalate.

4. The lenticular lens of any one of claims 1-3, wherein the base substrate has a thickness of 50 $\mu$m to 100 $\mu$m.

5. The lenticular lens of any one of claims 1-4, wherein the base substrate has an optical retardation that is greater than or equal to 7,000 nm at a wavelength of 550 nm.

6. The lenticular lens of any one of claims 1-5, wherein when the base substrate has a moisture permeability less than or equal to 100 g/m$^2$and is left at 63°C and at a relative humidity of 93% for 500 hours, a shrinkage ratio in a transverse direction of the base substrate is less than or equal to 0.1%.

7. The lenticular lens of any one of claims 1-6, wherein the pattern layer comprises at least one acrylic polymer comprising ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, n-octyl (meth)acrylate, isooctyl (meth)acrylate, isononyl (meth)acrylate, lauryl (meth)acrylate, and tetradecyl (meth)acrylate.

8. The lenticular lens of any one of claims 1-7, wherein the pattern layer comprises a pattern with a semicircular cross section; and or
wherein a pattern of the pattern layer has a pitch of 60 $\mu$m to 150 $\mu$m, and a height of 3 $\mu$m to 20 $\mu$m.

9. The lenticular lens of any one of claims 1-8, wherein the pattern layer has a refractive index of 1.45 to 1.60, a light transmittance that is greater than or equal to 92% at a wavelength of 550 nm, and a haze that is less than or equal to 2%.

10. The lenticular lens of any one of claims 1-9, wherein the pattern layer comprises at least one curing agent comprising at least one of polyfunctional phenol compound, an amine compound, an imidazole compound, an acid anhydride, an organophosphorus compound, a halide, a polyfunctional acrylic compound, a urethane compound, an isocyanate compound, an alcohol compound, polyamide, polysulfide, and boron trifluoride.

11. The lenticular lens of any one of claims 1-10, wherein a pattern of the pattern layer is formed by imprinting using a mold.

12. The lenticular lens of any one of claims 1-11, wherein a weight percent of an aromatic monomer included in the pattern layer is less than or equal to 20 wt %.

13. The lenticular lens of any one of claims 1-12, wherein the adhesive layer has a thickness of 10 $\mu$m to 30 $\mu$m.

14. A display apparatus for a three-dimensional (3D) head-up display (HUD), the display apparatus comprising:

a transparent substrate;
a polarizing film layer provided on the transparent substrate; and
a lenticular lens according to any one of claims 1-13, provided on the polarizing film layer opposite to the transparent substrate.

15. A vehicle comprising a display apparatus according to claim 14, configured to implement a three-dimensional (3D) head-up display (HUD).

FIG. 1

2

203
200  202
201
213
210  212
211
220

FIG. 2

FIG. 3

Europäisches
Patentamt

European
Patent Office

Office européen
des brevets

# EUROPEAN SEARCH REPORT

Application Number

EP 22 16 5570

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/070727 A1 (CHEN YING-TUNG [TW]) 9 March 2017 (2017-03-09) * paragraph [0042]; figure 2 * * paragraph [0060]; figure 5B * | 1-15 | INV. G02B3/00 G02B30/27 G02B27/01 |
| X | US 2018/257104 A1 (CHE YANLONG [JP] ET AL) 13 September 2018 (2018-09-13) * figure 1 * * claims 1, 4, 6 * | 1-15 | |
| X | US 5 216 543 A (CALHOUN CLYDE D [US]) 1 June 1993 (1993-06-01) * figure 6 * * column 5, line 55 – line 66 * | 1-15 | |
| A | US 2019/079218 A1 (LEE YOUNG-YOON [KR] ET AL) 14 March 2019 (2019-03-14) * claims 1, 2 * * figure 6 * | 1-15 | |
|  |  |  | TECHNICAL FIELDS SEARCHED (IPC) |
|  |  |  | G02B |

The present search report has been drawn up for all claims

| Place of search | Date of completion of the search | Examiner |
|---|---|---|
| Munich | 24 August 2022 | Le Masson, Nicolas |

EPO FORM 1503 03.82 (P04C01)

## ANNEX TO THE EUROPEAN SEARCH REPORT
## ON EUROPEAN PATENT APPLICATION NO.

**EP 22 16 5570**

This annex lists the patent family members relating to the patent documents cited in the above-mentioned European search report.
The members are as contained in the European Patent Office EDP file on
The European Patent Office is in no way liable for these particulars which are merely given for the purpose of information.

**24-08-2022**

| Patent document cited in search report | | Publication date | Patent family member(s) | | Publication date |
|---|---|---|---|---|---|
| US 2017070727 | A1 | 09-03-2017 | NONE | | |
| US 2018257104 | A1 | 13-09-2018 | CN | 108290432 A | 17-07-2018 |
| | | | JP | 6530509 B2 | 12-06-2019 |
| | | | JP | WO2017098920 A1 | 30-08-2018 |
| | | | US | 2018257104 A1 | 13-09-2018 |
| | | | WO | 2017098920 A1 | 15-06-2017 |
| US 5216543 | A | 01-06-1993 | NONE | | |
| US 2019079218 | A1 | 14-03-2019 | KR | 20190028130 A | 18-03-2019 |
| | | | US | 2019079218 A1 | 14-03-2019 |